# EUROPEAN PATENT APPLICATION

(11) **EP 3 711 894 A1**
(43) Date of publication of application: **23.09.2020**
(21) Application number: 19164623.1
(22) Date of filing: 22.03.2019
(51) Int. Cl.: B23K 26/14, B23K 26/144, B23K 26/18, B23K 26/38, B23K 26/40, B23K 101/18, B23K 103/04

(54) **LASER CUTTING METHOD**

(71) Applicant: Bystronic Laser AG, 3362 Niederönz (CH)
(72) Inventor: BERGER, Michael, 3005 Bern (CH)
(74) Representative: Frei Patent Attorneys

(57) **Abstract**

The present invention concerns a laser cutting method, the method comprising the steps of providing a workpiece of a metallic workpiece material, directing a laser beam onto a surface of the workpiece and moving the laser beam relative to the metal workpiece to create a laser cut. According to an aspect of the invention, a supplemental material is provided at the position of incidence. In this, the supplemental material is capable of reducing the melting temperature of the workpiece material when combined with the workpiece material. For example, the workpiece material and the supplemental material may together form a eutectic system.

## Description

### FIELD OF THE INVENTION

The invention is in the field of laser cutting of metal workpieces.

### BACKGROUND OF THE INVENTION

In laser cutting of metal workpieces, a directed laser beam moves relative to the metal workpiece to locally melt the metal material at the position of incidence of the laser beam on the workpiece. This produces a laser cut. Modern laser cutting machines also direct a gas flow onto the position of incidence of the laser beam. The gas flow may assist the removal ("blowing") of molten metal material and/or, if it contains molecular oxygen, be involved in a chemical reaction ("burning"). Both, the removal and, if applicable, the chemical reaction, help reducing the required laser power.

There is an ongoing need to optimize the laser cutting process.

### SUMMARY OF THE INVENTION

It is an object of the present invention to provide a laser cutting method that at least for some metallic workpiece materials is improved compared to the prior art.

The present invention concerns a laser cutting method, the method comprising the steps of providing a workpiece of a metallic workpiece material, directing a laser beam onto a surface of the workpiece to locally make the workpiece material flowable and moving the laser beam relative to the metal workpiece to create a laser cut. According to an aspect of the invention, a supplemental material is provided at the position of incidence. In this, the supplemental material is capable of reducing a melting temperature of the workpiece material when combined with the workpiece material.

By this approach, the required energy input may be reduced. This is by itself an advantage in that the power consumption of the laser cutting machine used is lower compared to the prior art. Also, there may be further advantages such as reduced damages due to burning effects, the capability of cutting through thicker workpieces compared to the prior art, etc.

In a first group of embodiments, the supplemental material is provided as a coating applied to the workpiece prior to directing the laser beam onto the surface.

For example, such coating may be of a material that has a comparably large laser radiation absorption (larger absorptivity/absorptance). For example, the absorptivity may be higher than the absorptivity of the workpiece material (on its surface) itself. Thereby, the supplemental material has an additional effect, namely the effect of increasing the absorption and thereby further increasing the efficiency.

Especially, but not only, in embodiments in which a sufficiently high absorptivity is not a material property of the supplemental material, the structure of the coating may be chosen such that radiation reflections are reduced compared to a plane surface. For example, in embodiments, the coating may be applied such as to form a nanostructured surface (nanotextured surface). According techniques are known in the art. In a special embodiment, the coating surface may correspond to a fractal surface.

A coating may be applied covering a large area of the one surface of the workpiece onto which the laser beam is directed. Alternatively, the coating may be applied selectively to only cover the track to be followed by the laser. For example, a cutting plan may be directly printed onto the workpiece. In this, the supplemental material may form part of a suitable ink containing the supplemental material. The coating may then be plotted onto the surface of the workpiece.

In a second group of embodiments, the supplemental material is provided as a gas, especially as a constituent of a gas jet directed onto the position of incidence of the laser beam.

Such a gas jet is an optional feature of all embodiments of the invention, including embodiments of the first group. Thus, generally, in addition to the laser beam, also a gas jet may be directed onto the position of incidence of the laser beam.

The supplemental material be chosen such as to form a eutectic system together with the workpiece material. In a eutectic system, there is a particular composition (eutectic composition) of the constituents at which the melting point is lower than the melting point of the constituents. Thus, a eutectic system is an example of a system in which one material (the supplemental material in the example of the present invention) is capable of reducing a melting temperature of the other material (the workpiece material in the present example). If the system has a composition deviating from the eutectic composition, the system will, when the temperature is raised above the melting temperature of the eutectic composition, form a saturated solution being a heterogeneous mixture of molten alloy material and of solid bodies of at least one of the constituents. Such mixture is flowable (i.e., capable of flowing) if the proportion of molten alloy material is sufficiently high.

It is an insight of the present invention that, especially in the presence of a gas jet that blows away sufficiently flowable material, it is not necessary that the workpiece material in the cut needs to be completely liquefied, i.e. not all workpiece material and/or not all supplemental material needs to be molten. Rather, a heterogeneous mixture of locally molten material and solid particles can be blown out of the cut also. Therefore, for example in embodiments with a eutectic system there is no need for the ratio between the workpiece material and the supplemental material to be precisely defined for the approach of the invention to work. Rather, it is sufficient if they may form the eutectic system, whereby heating to the solidus temperature, corresponding to the melting temperature of the eutectic composition, or to a temperature slightly above is sufficient. This solidus temperature will be below the melting temperature of the workpiece material.

An example of a eutectic system suitable for the present invention is the Iron-carbon system. Thus, for workpieces of steel, carbon is a suitable supplemental material. Carbon may be provided by way of a coating of any coating composition containing elemental carbon, such as a coating of graphite or an organic coating, including a coating of a carbon-based polymer. Examples of suitable coatings include carbon containing inks or polymers, especially polymers with a constituent that absorbs the laser radiation. In embodiments of the second group, the carbon may be provided as carbon containing gas, such as carbon dioxide or methane, or possibly, in a suitable (safe) environment, carbon monoxide.

Further examples include Eutectic systems including other prevalent workpiece materials, such as the copper-silicon system (with silicone as a possible silicon containing coating material for a copper workpiece), the copper-tin-system, the copper-zinc-system, the aluminum-silicon system and others. Also workpiece materials that themselves are alloys may be susceptible to adding a further material to form a ternary eutectic system.

Generally, the invention may apply to configurations in which the workpiece is provided as a sheet material, i.e. is plate-shaped, with the laser incident, for example perpendicularly, on a large plate surface. It is, however, not ruled out that the cutting method is applied to tubular workpieces in/on a tube laser cutting machine or to workpieces with more complex geometries.

A machine for carrying out the method described herein may be a laser cutting machine as known in the art. The machine may for example be of the 'flying beam' type.

In contrast to prior art laser cutting machines, however, the machine may for example be programmed for supplemental material parameters to be input and for cutting parameters to be adapted based on this input. For example, the laser radiation may, in presence of the supplemental material, be reduced compared to the situation without the supplemental material, and/or a cutting velocity (i.e. a velocity by which the laser beam is moved relative to the workpiece) may be enhanced.

The invention moreover concerns a laser cutting machine system, equipped for carrying out the method as described and defined in this text. The system comprises a laser cutting machine, for example as specified above, with a laser cutting head for emitting a laser beam. The machine further comprises a storage for holding a suitable supplemental material, for example a material capable of forming a eutectic system with a common workpiece material such as with steel, copper and or aluminum.

Such storage may comprise a foil coil - if the supplemental material is to be a coating over a large surface - or an ink tank, the latter especially for applying the coating selectively. In addition or as an alternative, the storage may comprise a gas container, such as a gas bottle filled with CO₂ or with methane, etc.

The laser cutting machine system may further comprise a printing device for applying the supplemental material if it is contained in an ink, the printing device especially being equipped for applying the supplemental material in a selective manner, for example in accordance with a cutting plan stored in a memory of the laser cutting machine.

Moreover, the system may further comprise information, for example stored in a memory of the laser cutting machine or other component of the system, which information enables a user to use and apply an appropriate supplemental material in an appropriate amount and/or which information is used by the laser cutting machine for setting the cutting parameters prior to the cutting process.

### BRIEF DESCRIPTION OF THE DRAWINGS

Hereinafter, embodiments of the present invention are described in more detail referring to drawings. The drawings are schematic and not to scale. In the drawings, same reference numbers refer to same or similar components. They show:
- Fig. 1:: A generic phase diagram of a eutectic system;
- Fig. 2: A laser cutting machine;
- Fig. 3:: A laser cutting head and a workpiece in an embodiment of the first group;
- Fig. 4:: A laser cutting head and a workpiece in an embodiment of the second group; and
- Fig. 5: A phase diagram of the iron-carbon system.

### DESCRIPTION OF THE PREFERRED EMBODIMENTS

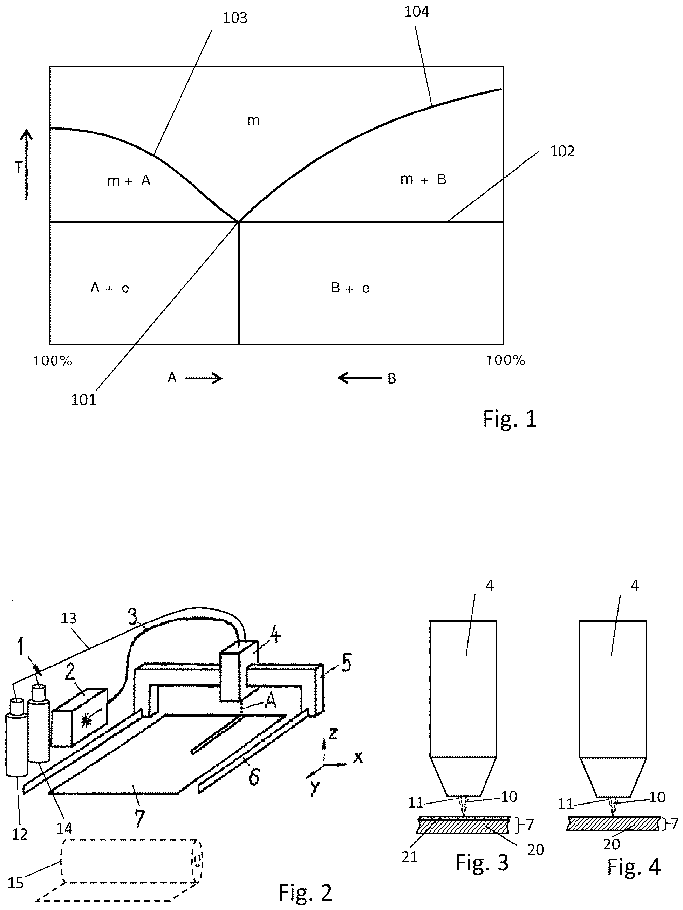

Figure 1 depicts a schematic phase diagram of a metallic binary eutectic system of the components A and B of which both or one may be metallic. The eutectic point 101 defines a eutectic composition (defined ratio between A and B) and a melting point of the eutectic composition, and defines a solidus line 102 corresponding to the melting point of the eutectic composition. At temperatures below this solidus line temperature, the system will form solid mixtures of A and the eutectic (A +e) or of B and the eutectic (B+e) if the composition deviates from the eutectic composition. Above the solidus line, but below the respective liquidus line 103, 104, the system if deviating from the eutectic composition will form supersaturated solutions, namely a melt plus solid A (m+A), or a melt plus solid B (m+B), respectively, whereas above the respective liquidus line 103, 104 the system will just form a melt (unsaturated solution).

From this diagram it becomes clear that for compositions deviating from pure or nearly pure A or B, it is sufficient to heat to the solidus temperature (temperature defined by the solidus line 102 corresponding to the melting point of the eutectic) to melt or partially melt the composition and thereby make the composition capable of flowing (flowable).

**Figure 2** shows an example of a laser cutting machine 1. The machine comprise a laser radiation source 2, a radiation guide 3, a laser cutting head 4, and a laser head 4 moving mechanism comprising a frame 5 relative to which the laser cutting head 4 is movable, relative to a working table (not shown) supporting the workpiece 7, in x direction and which itself is movable, for example on a pair or rails 6, in y direction. Other configurations with movable laser heads ("flying optics" configurations) and/or with a movable workpiece are possible and known in the art.

A common cutting gas such as N₂ is stocked in a gas container 12 and is fed via a gas line 13 to the cutting head 4.The cutting head 4 directs a focused laser beam A onto the workpiece 7 to generate, when the laser head is moved relative to the workpiece 7 a cut therein. In addition to the laser beam, the cutting head will also direct a gas jet (not shown in Fig. 2) onto the workpiece. The gas jet in a laser cutting process may have several functions. Firstly, it blows away any molten material in the cut. Secondly, by the gas composition being well-known it ensures reproducible conditions. The most commonly used gas jet is a gas jet of N₂. Alternatively, gas jets containing molecular oxygen for a burning process in the workpiece are also common.

**Figure 3** illustrates the method according to the first group of embodiments. The workpiece 7 in addition to the workpiece material 20 is provided with a coating 21 of a coating material. The coating material contains, and for example even consists of, a supplemental material. The material of the workpiece 7 and the supplemental material together form part of a two or more component eutectic system, such as of the iron-carbon system the Cu-Sn system, the Cu-Zn system or any other suitable system. The laser head emits, in addition to the laser beam 10, a gas jet 11 of for example a common cutting gas such as N₂. The laser beam will initiate a melting and mixing process, initially at the interface between the workpiece material 20 and the coating 21, whereby the temperature at which the material becomes flowable (by at least a portion thereof being molten) is reduced to the melting temperature of the eutectic or near eutectic. This will result in a cut through the material at an energy input that is reduced compared to the prior art.

In this, the coating material may be applied to the workpiece only locally at the cutting line, e.g. by printing. The coating material may alternatively be applied to the whole surface of a workpiece by plotting or in form of a foil, e.g. from a coil 15 (Fig. 2), covering the surface of the workpiece.

For example if the coating material is a foil, for example containing carbon, it may be applied to the workpieces (especially metal sheets) when they are being moved into the cutting machine or even before e.g. after production of the workpiece and before the workpiece is fed into the laser cutting machine.

**Figure 4** illustrates the method according to the second group of embodiments. The workpiece 7 does not necessarily comprise a coating but instead the gas jet comprises a supplemental material capable of forming a eutectic system together with the workpiece material 20. For example if the workpiece material is steel, the gas jet may comprise carbon dioxide as the supplemental material which may be delivered from a gas container 14 (Fig. 2).

In both groups of embodiments, the sequence of method steps may be summarized as follows: A metallic workpiece and a supplemental material are provided. Also, the laser cutting machine may be appropriately programmed. In embodiments in which the supplemental material is provided as a coating, the coating is applied to the workpiece material. The laser beam is then, in presence of the supplemental material, directed onto a surface of the workpiece to locally make the workpiece material flowable where the laser beam impinges on the workpiece. A gas jet - which in embodiments of the second group may contain the supplemental material or a portion thereof - is used to blow away flowable material. During these steps of using the laser beam to locally make material flowable and blowing flowable material away, the laser beam is moved relative to the workpiece to generate a laser cut.

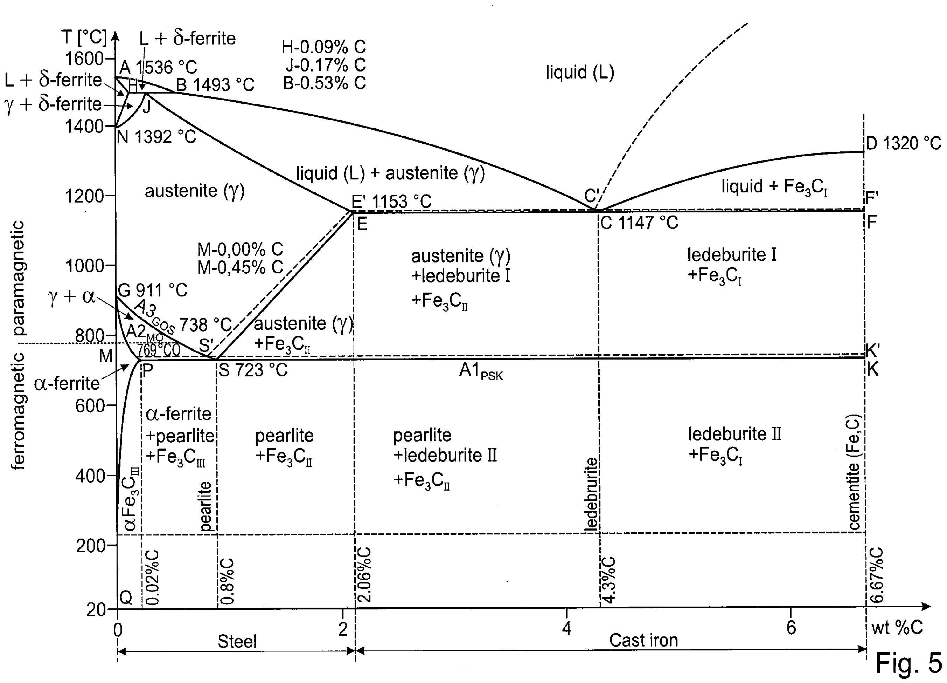

**Figure 5** is an excerpt of the online encyclopedia Wikipedia (https://en.wikipedia.org/wiki/File:Iron_carbon_phase_diagram.svg, retrieved on 11 March 2019) and reproduces the phase diagram of the iron-carbon-system. It becomes clear that at a carbon content of 4.3% a eutectic is formed, having a melting point of 1147°C, compared to 1536°C of iron. Hence, adding a sufficient amount of carbon - by way of a coating or stemming from a gas - will lead to a substantial reduction of the temperature required for making the iron-based. Steel-based workpiece materials will generally already include some elemental carbon (and may for example comprise other alloy components). Thus, the amount of carbon needed for the flowable phase at a temperature above 1147°C and a carbon content above 2.06% to exist may depend on the circumstances.

In Fig. 5, the dashed line shows the stable Fe/Carbon phase.

## Claims

1. A laser cutting method, the method comprising the steps of:
- Providing a workpiece (7) of a metallic workpiece material (20), and
- Directing a laser beam (10) onto a surface of the workpiece to locally make the workpiece material flowable at a position of incidence, and moving the laser beam relative to the metal workpiece to create a laser cut, **characterized by** the further step of
- Providing a supplemental material at the position of incidence, the supplemental material capable of reducing a melting temperature of the workpiece material when combined with the workpiece material.

2. The method according to claim 1, further comprising directing a gas jet (11) onto the position of incidence.

3. The method according to claim 1 or 2, wherein the step of providing the supplemental material comprises providing at least a portion of the supplemental material as a coating (21) of the workpiece material (20), the coating being applied prior to the step of directing the laser beam onto the surface.

4. The method according to claim 3, wherein the coating (21) has a higher absorptivity for the laser radiation than a surface of the workpiece material (20).

5. The method according to claim 3 or 4, wherein the coating (21) covers a surface of the workpiece material (20) facing a direction from which the laser beam is incident.

6. The method according to claim 3 or 4, wherein applying the coating (21) comprises applying the coating selectively only at positions where subsequently the laser cut is created.

7. The method according to any one of the previous claims, wherein the step of providing the supplemental material comprises providing at least a portion of the supplemental material as a gas supplied to the position of incidence.

8. The method according to any one of the previous claims, wherein the supplemental material contains elemental carbon.

9. The method according to any one of the previous claims, wherein the workpiece material (20) and the supplemental material together form part in a eutectic system.

10. The method according to any one of the previous claims, wherein the workpiece material is steel.

11. The method according to any one of the previous claims, wherein the workpiece (7) is plate-shaped, and the laser beam perpendicular is perpendicular to a plate surface of the workpiece.

12. The method according to any one of the previous claims wherein at the position of incidence, a heterogeneous mixture of molten material that includes the workpiece material and the supplemental material, and of solid particles is created removed to create the cut.

13. A laser cutting machine for carrying out the method according to any one of the previous claim, the laser cutting machine comprising a laser cutting head (4) for emitting the laser beam (A) and comprising a moving mechanism for moving the laser cutting head relative to the workpiece (7) for creating the laser cut, the machine being programmed for a property of the supplemental material being input as supplemental material parameter and for adapting at least one cutting parameter based on the supplemental material parameter.

14. A laser cutting machine system for carrying out the method according to any one of the claims 1-12 with a laser cutting machine comprising a laser cutting head (4) for emitting the laser beam (A) **characterized by** a storage for holding the suitable supplemental material.

15. The laser cutting machine system according to claim 14, wherein the storage is one of a gas container (14), an ink tank and a foil-coil (15).

16. The laser cutting machine system according to one of claims 14 to 15, further comprising a printing device for applying a supplemental material containing ink on a workpiece.
